# EUROPEAN PATENT SPECIFICATION

(11) **EP 4 619 694 B1**
(45) Date of publication and mention of the grant of the patent: **24.06.2026**
(21) Application number: 23828796.5
(22) Date of filing: 15.11.2023
(51) Int. Cl.: F26B 21/35, F26B 3/12, B01D 1/18, A01N 3/00, F26B 21/37

(54) **BIOMASS DRYING SYSTEM AND PROCESS**
SYSTEM UND VERFAHREN ZUR TROCKNUNG VON BIOMASSE
SYSTÈME ET PROCÉDÉ DE SÉCHAGE DE LA BIOMASSE

(30) Priority: 16.11.2022 IT 202200023565
(43) Date of publication of application: 24.09.2025
(73) Proprietor: Aethera Biotech S.r.l., 36043 Camisano Vicentino (IT)
(72) Inventor: NATALONI, Luigi, 40133 BOLOGNA (IT); PRESSI, Giovanna, 35030 RUBANO (PADOVA) (IT); GUARNERIO, Chiara Francesca, 37131 VERONA (IT); RIVA, Matteo, 36034 MALO (VICENZA) (IT)
(74) Representative: Biggi, Cristina
(86) International application number: PCT/IB2023/061530
(87) International publication number: WO 2024/105589

(56) References cited:
- EP-A2- 0 437 888
- WO-A1-2022/148845
- CN-A- 110 115 745
- FR-A1- 2 424 230
- JP-A- 2000 279 701
- JP-A- S53 138 986
- US-A- 1 779 516
- US-A- 3 741 273
- ÇAKALOZ T. ET AL: "Drying model for [alpha]-amylase in a horizontal spray dryer", JOURNAL OF FOOD ENGINEERING, vol. 31, no. 4, 1 March 1997 (1997-03-01), AMSTERDAM, NL, pages 499 - 510, XP093043280, ISSN: 0260-8774, DOI: 10.1016/S0260-8774(96)00018-0

## Description

### FIELD OF APPLICATION

The invention describes a system for drying biomasses originating from plant cells, in particular homogenised and of a predefined botanical species. The invention further describes a process for drying biomasses originating from plant cells, in particular homogenised and of a predefined botanical species.

The present description refers to this field of application to simplify the disclosure thereof.

### PRIOR ART

Equipment is known to produce and stabilise biomasses originating from botanical species; the cells obtained are subsequently developed and a solid fraction is obtained, also referred to as light or with low percentage of water, comprised between 2-6% and a liquid fraction, also referred to as heavy, comprised between 94-98%.

There is a need to dry the biomasses which, at the end of the development step, are mixed in large amounts of water and therefore not usable.

In other words, there is a need to separate the solid fraction from the biomasses.

Current drying techniques use non-efficient vertical spray dryers that are unable to extract solid particles from the biomass with a particle size suitable for subsequent treatments.

Nor, on the other hand, is it possible to carry out a concentration before drying because the fluid concentrate becomes non-Newtonian already at low percentages of solid fraction, which makes a pre-concentration step unfeasible.

Even solutions that use cyclones to evacuate solid particles and a screw to evacuate heavy particles are not viable since the heavy particles, remaining in the chamber longer, deteriorate, become viscous and clog the screw preventing the operation thereof.

Aim of the present invention is to solve or at least alleviate the problems of the prior art.

Specific aim of the present invention is to realize a system/process for drying biomasses that allows to obtain a solid fraction with a particle size suitable for the subsequent treatments.

The aim is also to obtain a high yield of solid fraction production even with a non-standard dryer.

JP 2000 279701 A discloses a biomass drying system suitable for drying biomass originating from homogenised plant cell lines of a predefined botanical species.

### SUMMARY OF THE INVENTION

In a first aspect, the invention describes a biomass drying system, as described in claim 1.

Advantageous aspects are described in dependent claims from 2 to 5.

In a second aspect, the invention describes a process for drying biomasses, as described in claim 6.

The invention allows to maximize the obtaining of solid particles compared to the heavy ones by optimizing the yield of the drying system/process.

The aforesaid technical effects/advantages and other technical effects/advantages of the invention will emerge in greater detail from the description, provided below, of an example embodiment, given by way of non-limiting illustration with reference to the appended drawings.

### BRIEF DESCRIPTION OF THE DRAWINGS

Figure 1 is a schematic view of a dryer comprised in the drying system of the invention.
Figure 2 is a schematic view of the system of the invention.
Figure 3 is a schematic view of a component of the system of the invention.

### DETAILED DESCRIPTION

Starting from the described known technique that uses a vertical dryer and from the problems highlighted, the Applicant has understood that the product that exited the drying chamber when the screw was not clogged was too viscous, it stuck too much to the walls, and this occurred because the physical time it took the screw to remove the product from the chamber, on the order of a few seconds, was still too high.

The Applicant has considered that, given the thermosensitivity of the product, it is not possible to remove the solid fraction from the chamber, nor is there a removal method that does not leave the product exposed to high temperatures for too long.

The Applicant has thus decided to remove the screw and to set up a special dryer to force as much product as possible through the cyclone.

The Applicant has found that the product that arrives in the cyclone remains much less in contact with hot air than the one that instead must be removed from the chamber. It is therefore lighter and less denatured as well as finer. On the other hand, having high residence times, the product in the chamber is more prone to contamination, especially by spores.

The Applicant has considered that discarding the product that remains in the chamber without optimizing the operating parameters of the dryer is incredibly risky. In fact, the product exiting the chamber can represent even 60-70% of what is produced.

The Applicant has understood that it is possible to achieve high drying yields (>80%) although the product that would remain in the chamber is excluded (which therefore must be less than 10% of the total product).

This is possible by working through mathematical/statistical processing models applied to the operation of a particular dryer.

The drying system of the invention, which exploits a synergy between a particular dryer and a mathematical/statistical processing model applied to the operation thereof, allows the achievement of the technical effect of maximizing the obtaining of solid particles compared to the heavy ones, thus optimizing the yield of the drying system/process.

The technical effect is achieved with a dryer with an atypical structure, that is, a horizontal dryer that allows a higher residence time of the suspension in the chamber to give the possibility to the different particles to be able to agglomerate and precipitate at a low percentage of water.

The horizontal spray dryer of the invention does not use a screw and this is made possible by applying the innovative mathematical/statistical processing model of the invention.

In particular, this model allows to obtain efficiency values such that the presence of the screw is no longer needed, as the percentage of residues that accumulate inside the main chamber is significantly reduced.

The mathematical/statistical model allows to establish a relationship among the parameters such as, for example , flow rate, air, temperatures, type of cyclone, cyclone opening valve (up to 28 parameters) and performs a processing as a function of the specific cell line and of the best conditions for the yield of the cell line.

In case of high yield, the configuration parameters (e.g. flow rate, air, temperatures, cyclone type, internal pressure, opening valve status) are stored to optimize the operation of the horizontal dryer.

The mathematical/statistical processing allows to obtain the highest yield for each different cell line treated, i.e. starting from different cell lines.

In more detail, the invention describes in a first aspect a system for drying biomasses originating from homogenised plant cell lines of a predefined botanical species wherein the biomass comprises a solid fraction of between 2% and 6% and an aqueous fraction of between 94% and 98%.

In the context of the present disclosure, some terminological conventions have been adopted in order to make reading simpler and more fluid. Such terminological conventions are clarified below with reference to the appended figures.

Since the invention is intended to be used in the presence of gravitational acceleration g, it is understood that the latter unequivocally defines the vertical direction. Similarly, it is understood that the terms "high", "upper", "above" and the like are unambiguously defined based on the acceleration of gravity *g* relative to the terms "low", "lower", "below" and the like.

The vertical direction also identifies the planes and/or directions perpendicular thereto as "horizontal" planes.

With reference to the figures, the system according to the invention comprises a horizontal spray dryer 10 adapted to receive a biomass as input and obtain from the biomass solid particles having a predefined particle size.

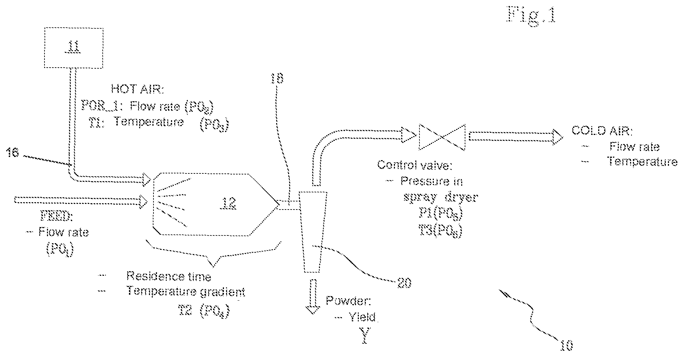

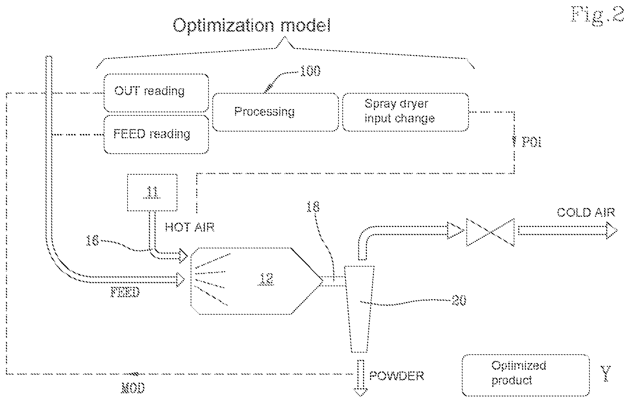

With reference to Figures 1 and 2, the horizontal spray dryer 10 comprises a drying chamber 12, extending prevalently in a horizontal direction, and adapted to dry the biomass.

The horizontal spray dryer 10 further comprises a supply conduit adapted to supply a flow FEED of the biomass to the drying chamber 12; according to the invention, the flow FEED represents an operating parameter P01 of the drying system of the invention.

The horizontal spray dryer 10 further comprises an air_supply unit 11 adapted to inject hot air into the drying chamber 12 through an inlet conduit 16 and a control valve DAPO.

The air supply unit 11, according to the invention, is a pneumatic component that injects hot air devoid of humidity into the chamber 12 and nebulizes it creating a fluid bed.

The air supply unit 11, according to the invention, is adapted to regulate, by means of the control valve DAPO, the injection of air at a flow rate Por_1 and at a temperature T1 defined on the basis of the predefined botanical species treated.

The determined effect is that the suspended product particles do not stick to the inner walls of the chamber and are immediately cyclonized through a cyclone unit described below.

According to the invention, the flow rate Por_1 and the temperature T1 represent respective operating parameters PO2,PO3 of the drying system of the invention.

The horizontal spray dryer 10 comprises an outlet conduit 18 adapted for an outflow of the solid fraction from the drying chamber 12 at an average operating temperature T2; according to the invention, the average operating temperature T2 represents an operating parameter PO4 of the system.

The horizontal spray dryer 10 comprises a cyclone unit 20 connected to the drying chamber 12 and receiving as input the solid fraction at the operating temperature T2 through the outlet conduit 18.

The cyclone unit 20 is adapted to separate the solid fraction at the predefined particle size through agitation, pressure variation P1 and further heating T3 of the input solid fraction, wherein the pressure variation P1 and further heating T3 represent respective operating parameters PO5,PO6 of the drying system of the invention.

According to the invention, the horizontal spray dryer 10 is adapted to operate on the basis of predefined values of the operating parameters POi (i=1..n) defined on the basis of said predefined botanical species and/or cell line.

Preferably, the plurality of operating parameters POi (i=1..n) comprises at least:
PO1: flow rate of incoming biomass FEED;
PO2: flow rate of incoming air Por_1;
PO3: temperature of said incoming air T1;
PO4: average temperature in the drying chamber T2;
PO5: pressure in the cyclone unit P1;
PO6: temperature in the cyclone T3;

Other operating parameters POi comprise pressure and/or temperature and/or flow rate and/or weight regulation parameters associated with the components of the described horizontal spray dryer.

These operating parameters can be detected at the inlet to the system or at the components of the system itself.

The drying system of the invention comprises a processing unit 100.

In general, this processing unit 100 can consist of a single electronic device, suitably programmed to perform the functions described, and different modules can correspond to hardware entities and/or software routines forming part of the programmed device.

Alternatively, or additionally, such functions can be performed by a plurality of electronic devices over which the aforesaid functional modules can be distributed.

The processing unit 100 can further rely on one or more processors for the execution of the instructions contained in the memory modules.

Moreover, the aforesaid functional modules can be distributed over different local or remote computers on the basis of the architecture of the network in which they reside.

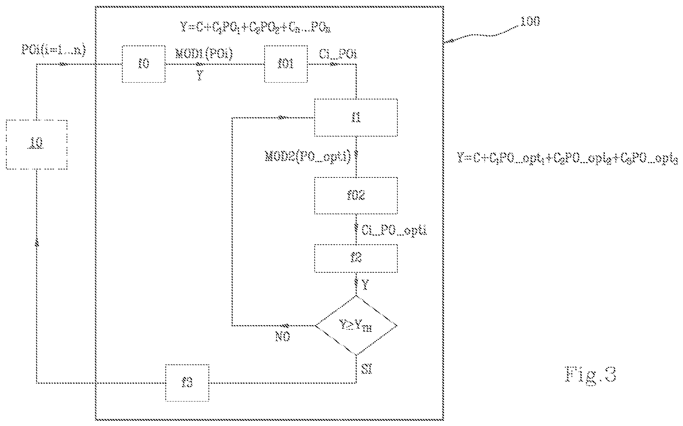

In particular, with reference to figure 3, the processing unit 100 is configured to (f0) calculate a first mathematical model MOD1 of operation of the horizontal spray dryer 10 for the treated biomass.

According to the invention, the model is representative of a yield Y of the dryer, calculated as a function of the plurality of operating parameters POi weighed with respective weights.

According to the invention, in the first analysis, the first mathematical model MOD1 of operation of the horizontal spray dryer 10 for the treated biomass is a linear model in which all the operating parameters POi are linearly combined to obtain the yield Y according to the equation

Y= C+ C₁ PO₁ + C₂ PO₂ + ......... . . Cₙ POₙ .

Still with reference to figure 3, the processing unit 10 is further configured to (f01) calculate coefficients Ci_POi of every selected individual operating parameter POi for a maximisation of the yield Y of the first mathematical model MOD1.

The processing unit 10 is further configured to repeat steps of selecting among the considered operating parameters and calculating respective coefficients until arriving at a yield value Y considered as optimal, for example until obtaining a yield value higher than a predefined threshold value Y_{TH}.

The processing unit 100 is further configured to calculate a second mathematical model MOD2 of operation of the horizontal spray dryer 10 for the treated biomass selecting parameters indicative of an optimal yield PO_optᵢ from the plurality of operating parameters POi (i=1..n) on the basis of a simulation of an impact of every individual operating parameter POi on the mathematical model for every predefined botanical species and/or cell line.

The indicative parameters are contained in a proprietary database.

The system of the invention provides a database DB_1 comprising relationships between every single operating parameter POi and every predefined botanical species and/or cell line for a calculation of the yield Y by means of the mathematical model, and in the selection step f1, the mathematical model of operation of the horizontal spray dryer 10 for the treated biomass is a linear model in which only the parameters indicative of optimal yield PO_opt_i are linearly combined to obtain the yield Y according to the equation

Y= C+ C₁ PO_opt₁ + C₂ PO_Opt₂ + C₃ PO_opt₃

which represents a subset of the initial yield equation in which only three parameters are assumed to be indicative of an optimal yield.

According to the invention, the selection of the parameters indicative of optimal yield P_opt_i is made by performing a calculation of P-Value and F-value, i.e. statistical values that indicate the probability that a single regression function of that parameter is well approximated, for each parameter indicative of optimal yield P_opt_i.

On the basis of the calculated statistical values, the invention provides for discarding some of the parameters P_opt_i and recalculating the model.

In addition, the invention provides for entering quadratic and/or interaction operating parameters, for example a parameter may be the product of two different parameters or the single parameter squared.

The mathematical model obtained with this modality is, therefore, non-linear.

The selection of the parameters indicative of optimal yield leads to two important technical effects:
- Determining what the parameters are that actually affect the model, allowing to make timely decisions about what is primary to intervene in case of problems, and
- simplify the model.

Once the new parameters have been established, the invention provides for the respective coefficients to be recalculated.

By recalculating the new coefficients, the model will have a different precision. If the parameter selection was successful, the new precision will be higher than the previous one.

Once the coefficients have been recalculated, an iterative process of parameter exclusions begins, which will lead to a reduced model, but more precise than the initial one.

To do this, the processing unit 100 is further configured to perform a step f02, in particular referred to a non-linear mathematical model, of calculating coefficients Ci_PO_opti of every selected individual operating parameter PO_opti for a maximization of the yield Y of the second mathematical model MOD2.

The processing unit is configured to carry out step (f2) of calculating the yield value Y;

According to the invention, the steps of selecting (f1), of calculating coefficients (f02) and of calculating the yield (f2) are performed until the calculated yield value Y remains lower than a predefined threshold value Y_{TH}.

According to the invention, said threshold value Y_{TH} is defined on the basis of physical limits of the plant and/or of the drying process.

In one embodiment, the temperature cannot be higher than 95°C because then the product degrades, nor lower than 85°C otherwise there is not enough enthalpic heat of evaporation of the water.

In another embodiment, the control valve operates in a percentage opening range between 50 and 85 for mechanical constraints.

When the yield Y is greater than the threshold value Y_{TH}, the processing unit 100 is further configured to carry out a step f3 of applying the second mathematical model MOD2 to at least a part of the operating parameters POi of the dryer 10 to configure the dryer 10 so as to obtain from the biomass the solid particles at the predefined particle size, with the calculated yield value Y.

In one embodiment, after a significant time of execution of the model, the coefficients could be defined in an increasingly narrow range.

After a predefined time of execution of the model, this model could be refined by associating it to a machine learning program that sets the important execution parameters, preventing them from being recalculated later.

In a second aspect, the invention describes a drying process, associated with the drying system described above and comprising the steps of:
providing a horizontal spray dryer 10 to receive as input the biomass FEED and obtain from the biomass solid particles having a predefined particle size;
wherein the horizontal spray dryer 10 comprises:
   a drying chamber 12, extending prevalently in a horizontal direction, and adapted to dry the biomass;
   a supply conduit adapted to supply a flow FEED of the biomass to the drying chamber 12, wherein the flow FEED represents an operating parameter P01 of the system;
   an air supply unit 11 adapted to inject hot air into the drying chamber 12 through an inlet conduit 16 and a control valve DAPO, wherein the air supply unit 11 is adapted to regulate, by means of the control valve DAPO, the injection of air at a flow rate Por_1 and at a temperature T1 defined on the basis of the predefined botanical species, wherein the flow rate Por_1 and the temperature T1 represent respective operating parameters PO2,PO3 of the system;
   an outlet conduit 18 adapted for an outflow of the solid fraction from the drying chamber 12 at an average operating temperature T1, wherein the average operating temperature T2 represents an operating parameter PO4 of the system;
   a cyclone unit 20 connected to the drying chamber 12 and receiving as input the solid fraction at said operating temperature T2 through the outlet conduit 18, wherein the cyclone unit 20 is adapted to separate the solid fraction at the predefined particle size through agitation, pressure variation P1 and further heating T3 of the input solid fraction, wherein the pressure variation P1 and further heating T3 represent respective operating parameters PO5,PO6 of the system;
   wherein the horizontal spray dryer 10 is adapted to operate on the basis of predefined values of at least the operating parameters POi (i=1..n) defined on the basis of the predefined botanical species and/or cell line;
   (f0) calculating a first mathematical model MOD1 of operation of the horizontal spray dryer 10 for the biomass representative of a yield Y of the dryer, as a function of the plurality of operating parameters POi weighed with respective weights;
   (f01) calculating coefficients (Ci_POi) of every selected individual operating parameter POi for a maximisation of the yield Y of the first mathematical model MOD1;
   (f1) calculating a second mathematical model MOD2 of operation of the horizontal spray dryer 10 for the biomass, selecting parameters indicative of an optimal yield PO_optᵢ from the plurality of operating parameters POi (i=1..n) on the basis of a simulation of an impact of every individual operating parameter POi on the mathematical model for every predefined botanical species and/or cell line;
   (f02) calculating coefficients Ci_PO_opti of every selected individual operating parameter PO_optᵢ for maximisation of the yield Y of the second mathematical model MOD2;
   (f2) calculating the yield value Y;
   wherein the steps (f1), (f02) and (f2) are carried out as long as the calculated yield value Y remains below a predefined threshold value Y_{TH};
   if the calculated yield value Y is greater than the predefined threshold value Y_{TH}, (f3) applying the second mathematical model MOD2 to at least a part of the operating parameters POi of the dryer 10 to configure the dryer 10 so as to obtain from the biomass the solid particles at the predefined particle size, with the calculated yield value Y.

Additional process steps, with respect to what has just been reported, correspond to operating functions performed by the horizontal dryer and by the processing unit, as previously described.

A biomass drying system and process has been described.

The invention allows to maximize the obtaining of solid particles with respect to the heavy ones by optimizing the yield of the system/process.

## Claims

1. A biomass drying system (FEED) for drying biomass originating from homogenised plant cell lines of a predefined botanical species, wherein the biomass comprises a solid fraction of between 2% and 6% and an aqueous fraction of between 94% and 98%, wherein the system comprises:
a horizontal spray dryer (10) adapted to receive said biomass (FEED) as input and obtain from the biomass solid particles having a predefined particle size;
wherein said horizontal spray dryer (10) comprises:
a drying chamber (12), extending prevalently in a horizontal direction, and adapted to dry said biomass;
a supply conduit adapted to supply a flow (FEED) of the biomass to said drying chamber (12), wherein said flow (FEED) represents an operating parameter (P01) of the system;
an air supply unit (11) adapted to inject hot air into said drying chamber (12) through an inlet conduit (16) and a control valve (DAPO), wherein said air supply unit (11) is adapted to regulate, by means of said control valve (DAPO), said injection at a flow rate (Por_1) and at a temperature (T1) defined on the basis of said predefined botanical species, wherein said flow rate (Por_1) and said temperature (T1) represent respective operating parameters (PO2,PO3) of the system;
an outlet conduit (18) adapted for an outflow of said solid fraction from said drying chamber (12) at an average operating temperature (T2), wherein said average operating temperature (T2) represents an operating parameter (PO4) of the system;
a cyclone unit (20) connected to said drying chamber (12) and receiving as input said solid fraction at said operating temperature (T2) through said outlet conduit (18), wherein said cyclone unit (20) is adapted to separate said solid fraction at said predefined particle size through agitation, pressure variation (P1) and further heating (T3) of said input solid fraction, wherein said pressure variation (P1) and further heating (T3) represent respective operating parameters (PO5,PO6) of the system;
wherein said horizontal spray dryer (10) is adapted to operate on the basis of predefined values of at least said operating parameters (POi; i=1..n) defined on the basis of said predefined botanical species and/or cell line;
a processing unit (100) configured to:
f0. calculate a first mathematical model (MOD1) of operation of said horizontal spray dryer (10) for said biomass representative of a yield (Y) of said dryer, as a function of said plurality of operating parameters (POi) weighted with respective weights;
f01 calculate coefficients (Ci_POi) of every selected individual operating parameter (POi) for a maximisation of the yield (Y) of said first mathematical model (MOD1);
carry out steps of:
(f1) calculating a second mathematical model (MOD2) of operation of said horizontal spray dryer (10) for said biomass, selecting parameters indicative of an optimal yield (PO_optᵢ) from said plurality of operating parameters (POi; i=1..n) on the basis of a simulation of an impact of every individual operating parameter (POi) on said mathematical model for every predefined botanical species and/or cell line;
(f02) calculating coefficients (Ci_PO_opti) of every selected individual operating parameter (PO_optᵢ) for maximisation of the yield (Y) of said second mathematical model (MOD2);
(f2) calculating said yield value (Y);
wherein said steps (f1), (f02) and (f2) are carried out as long as said calculated yield value (Y) remains below a predefined threshold value (Y_{TH}); if said calculated yield value (Y) is greater than said predefined threshold value (Y_{TH}), carry out a step (f3) of applying the second mathematical model (MOD2) to at least a part of the operating parameters (POi) of said dryer (10) to configure said dryer (10) so as to obtain from the biomass said solid particles at said predefined particle size, with said calculated yield value (Y).

2. The system according to claim 1, wherein said plurality of operating parameters (POi; i=1..n) comprises at least:
(PO1) flow rate of incoming biomass (FEED);
(PO2) flow rate of incoming air (Por_1);
(PO3) temperature of said incoming air (T1).
(PO4) average temperature in the drying chamber (T2);
(PO5) pressure in the cyclone unit (P1);
(PO6) temperature in the cyclone (T3).

3. The system according to claim 1 or 2, wherein said mathematical model (step f0) of operation of said horizontal spray dryer (10) for said biomass is a linear model in which all the operating parameters (POi) are linearly combined to obtain said yield (Y) according to the equation Y= C+ C₁ PO₁ + C₂ PO₂ + ......... . . Cₙ POₙ .

4. The system according to any one of the preceding claims, comprising a database (DB_1) comprising relations between every individual operating parameter (POi) and every predefined botanical species and/or cell line for a calculation of said yield (Y) by means of said mathematical model, and in said selection step (f1), said mathematical model of operation of said horizontal spray dryer (10) for said biomass is a linear model in which only the parameters indicative of an optimal yield (PO_opt_i) are linearly combined to obtain said yield (Y) according to the equation
Y= C+ C₁ PO_opt₁ + C₂ PO_Opt₂ + C₃ PO_opt₃

5. The system according to any one of the preceding claims, wherein said step (f1) of selecting parameters indicative of the optimal yield (PO_opt_i) is performed by carrying out the steps of
- calculating, for every parameter indicative of the optimal yield (PO_opt_i), statistical values that indicate the probability that a single regression function of that parameter is well approximated;
- on the basis of said calculated values, discarding some of said parameters (PO_opt_i) and recalculating the model and/or
- entering quadratic and interaction parameters.

6. A process for drying biomasses originating from homogenised plant cell lines of a predefined botanical species, wherein the biomass comprises a solid fraction of between 2% and 6% and an aqueous fraction of between 94% and 98%, wherein the process comprises the steps of:
providing a horizontal spray dryer (10) to receive as input said biomass (FEED) and obtain from the biomass solid particles having a predefined particle size;
wherein said horizontal spray dryer (10) comprises:
a drying chamber (12), extending prevalently in a horizontal direction, and adapted to dry said biomass;
a supply conduit adapted to supply a flow (FEED) of the biomass to said drying chamber (12), wherein said flow (FEED) represents an operating parameter (P01) of the system;
an air supply unit (11) adapted to inject hot air into said drying chamber (12) through an inlet conduit (16) and a control valve (DAPO), wherein the air supply unit (11) is adapted to regulate, by means of said control valve (DAPO), said injection of air at a flow rate (Por_1) and at a temperature (T1) defined on the basis of said predefined botanical species, wherein said flow rate (Por_1) and said temperature (T1) represent respective operating parameters (PO2,PO3) of the system;
an outlet conduit (18) adapted for an outflow of said solid fraction from said drying chamber (12) at an average operating temperature (T2), wherein said average operating temperature (T2) represents an operating parameter (PO4) of the system;
a cyclone unit (20) connected to said drying chamber (12) and receiving as input said solid fraction at said operating temperature (T2) through said outlet conduit (18), wherein said cyclone unit (20) is adapted to separate said solid fraction at said predefined particle size through agitation, pressure variation (P1) and further heating (T3) of said input solid fraction, wherein said pressure variation (P1) and further heating (T3) represent respective operating parameters (PO5,PO6) of the system;
wherein said horizontal spray dryer (10) is adapted to operate on the basis of predefined values of at least said operating parameters (POi; i=1..n) defined on the basis of said predefined botanical species and/or cell line;
(f0) calculating a first mathematical model (MOD1) of operation of said horizontal spray dryer (10) for said biomass representative of a yield (Y) of said dryer, as a function of said plurality of operating parameters (POi) weighted with respective weights;
(f01) calculating coefficients (Ci_POi) of every selected individual operating parameter (POi) for a maximisation of the yield (Y) of said first mathematical model (MOD1);
(f1) calculating a second mathematical model (MOD2) of operation of said horizontal spray dryer (10) for said biomass, selecting parameters indicative of an optimal yield (PO_optᵢ) from said plurality of operating parameters (POi; i=1..n) on the basis of a simulation of an impact of every individual operating parameter (POi) on said mathematical model for every predefined botanical species and/or cell line;
(f02) calculating coefficients (Ci_PO_opti) of every selected individual operating parameter (PO_optᵢ) for maximisation of the yield (Y) of said second mathematical model (MOD2);
(f2) calculating said yield value (Y);
wherein said steps (f1), (f02) and (f2) are carried out as long as said calculated yield value (Y) remains below a predefined threshold value (Y_{TH});
if said calculated yield value (y) is greater than said predefined threshold value (Y_{TH}), (f3) applying the second mathematical model (MOD2) to at least a part of the operating parameters (POi) of said dryer (10) to configure said dryer (10) so as to obtain from the biomass said solid particles at said predefined particle size, with said calculated yield value (y).

## Patentansprüche

1. System zur Trocknung von Biomasse (FEED) zum Trocknen von Biomasse, die aus homogenisierten Pflanzenzelllinien einer vordefinierten botanischen Spezies stammt, wobei die Biomasse eine feste Fraktion zwischen 2 % und 6 % und eine wässrige Fraktion zwischen 94 % und 98 % umfasst, wobei das System Folgendes umfasst:
einen horizontalen Sprühtrockner (10), der angepasst ist, um die Biomasse (FEED) als Eingabe zu empfangen und aus der Biomasse feste Partikeln mit einer vordefinierten Partikelgröße zu erhalten;
wobei der horizontale Sprühtrockner (10) Folgendes umfasst:
eine Trocknungskammer (12), die sich überwiegend in einer horizontalen Richtung erstreckt und angepasst ist, um die Biomasse zu trocknen;
eine Zufuhrleitung, die angepasst ist, um der Trocknungskammer (12) einen Strom (FEED) der Biomasse zuzuführen, wobei der Strom (FEED) einen Betriebsparameter (P01) des Systems darstellt;
eine Luftzufuhreinheit (11), die angepasst ist, um heiße Luft in die Trocknungskammer (12) durch eine Einlassleitung (16) und ein Steuerventil (DAPO) einzuspritzen, wobei die Luftzufuhreinheit (11) angepasst ist, um mittels des Steuerventils (DAPO) die Einspritzung mit einer Durchflussrate (Por_1) und einer Temperatur (T1) zu regulieren, die auf der Grundlage der vordefinierten botanischen Spezies definiert sind, wobei die Durchflussrate (Por_1) und die Temperatur (T1) jeweilige Betriebsparameter (PO2,PO3) des Systems darstellen;
eine Auslassleitung (18), die für einen Ausfluss der festen Fraktion aus der Trocknungskammer (12) bei einer durchschnittlichen Betriebstemperatur (T2) angepasst ist, wobei die durchschnittliche Betriebstemperatur (T2) einen Betriebsparameter (PO4) des Systems darstellt;
eine Zykloneinheit (20), die mit der Trocknungskammer (12) verbunden ist und als Eingabe die feste Fraktion bei der Betriebstemperatur (T2) durch die Auslassleitung (18) empfängt, wobei die Zykloneinheit (20) angepasst ist, um die feste Fraktion bei der vordefinierten Partikelgröße durch Rühren, Druckvariation (P1) und weiteres Erwärmen (T3) der eingegebenen festen Fraktion zu trennen, wobei die Druckvariation (P1) und das weitere Erwärmen (T3) jeweilige Betriebsparameter (PO5,PO6) des Systems darstellen;
wobei der horizontale Sprühtrockner (10) angepasst ist, um auf der Grundlage von vordefinierten Werten von mindestens den Betriebsparametern (POi; i=1..n), die auf der Grundlage der vordefinierten botanischen Spezies und/oder Zelllinie definiert sind, zu arbeiten;
eine Verarbeitungseinheit (100), die zu Folgendem ausgelegt ist:
f0. Berechnen eines ersten mathematischen Modells (MOD1) des Betriebs des horizontalen Sprühtrockners (10) für die Biomasse, das für eine Ausbeute (Y) des Trockners repräsentativ ist, als Funktion der Vielzahl von Betriebsparametern (POi), die mit jeweiligen Gewichten gewichtet sind;
f01 Berechnen von Koeffizienten (Ci_POi) eines jeden ausgewählten einzelnen Betriebsparameters (POi) für eine Maximierung der Ausbeute (Y) des ersten mathematischen Modells (MOD1);
zum Ausführen der folgenden Schritte:
(f1) Berechnen eines zweiten mathematischen Modells (MOD2) des Betriebs des horizontalen Sprühtrockners (10) für die Biomasse, Auswählen von Parametern, die indikativ für eine optimale Ausbeute (PO_optᵢ) sind, aus der Vielzahl von Betriebsparametern (POi; i=1..n) auf der Grundlage einer Simulation einer Auswirkung eines jeden einzelnen Betriebsparameters (POi) auf das mathematische Modell für eine jede vordefinierte botanische Spezies und/oder Zelllinie;
(f02) Berechnen von Koeffizienten (Ci_PO_optᵢ) eines jeden ausgewählten einzelnen Betriebsparameters (PO_optᵢ) für die Maximierung der Ausbeute (Y) des zweiten mathematischen Modells (MOD2);
(f2) Berechnen des Ausbeutewerts (Y);
wobei die Schritte (f1), (f02) und (f2) ausgeführt werden, solange der berechnete Ausbeutewert (Y) unter einem vordefinierten Schwellenwert (Y_{TH}) bleibt; wenn der berechnete Ausbeutewert (Y) größer als der vordefinierte Schwellenwert (Y_{TH}) ist, Ausführen eines Schritts (f3) zum Anwenden des zweiten mathematischen Modells (MOD2) auf mindestens einen Teil der Betriebsparameter (POi) des Trockners (10), um den Trockner (10) so auszulegen, dass aus der Biomasse die festen Partikel mit der vordefinierten Partikelgröße mit dem berechneten Ausbeutewert (Y) erhalten werden.

2. System nach Anspruch 1, wobei die Vielzahl von Betriebsparametern (POi; i=1..n) mindestens Folgendes umfasst:
(PO1) Durchflussrate der einströmenden Biomasse (FEED);
(PO2) Durchflussrate der einströmenden Luft (Por_1);
(PO3) Temperatur der einströmenden Luft (T1);
(PO4) Durchschnittstemperatur in der Trocknungskammer (T2);
(PO5) Druck in der Zykloneinheit (P1);
(PO6) Temperatur im Zyklon (T3).

3. System nach Anspruch 1 oder 2, wobei das mathematische Modell (Schritt f0) des Betriebs des horizontalen Sprühtrockners (10) für die Biomasse ein lineares Modell ist, in dem alle Betriebsparameter (POi) linear kombiniert werden, um die Ausbeute (Y) gemäß der Gleichung Y= C+C₁ PO₁ + C₂ PO₂ + ...... . .Cₙ POₙ zu erhalten.

4. System nach einem der vorhergehenden Ansprüche, umfassend eine Datenbank (DB_1), die Beziehungen zwischen einem jeden einzelnen Betriebsparameter (POi) und einer jeden vordefinierten botanischen Spezies und/oder Zelllinie für eine Berechnung der Ausbeute (Y) mittels des mathematischen Modells umfasst, und in dem Auswahlschritt (f1) das mathematische Modell des Betriebs des horizontalen Sprühtrockners (10) für die Biomasse ein lineares Modell ist, in dem nur die Parameter, die indikativ für eine optimale Ausbeute (PO_opt_i) sind, linear kombiniert werden, um die Ausbeute (Y) gemäß der Gleichung
Y= C+ C₁ PO_opt₁ + C₂ PO_opt₂ + C₃ PO_opt₃ zu erhalten.

5. System nach einem der vorhergehenden Ansprüche, wobei der Schritt (f1) zum Auswählen von Parametern, die indikativ für die optimale Ausbeute (PO_opt_i) sind, durch Ausführen der folgenden Schritte durchgeführt wird:
- Berechnen, für einen jeden Parameter, der indikativ für die optimale Ausbeute (PO_opt_i) ist, von statistischen Werten, die die Wahrscheinlichkeit anzeigen, dass eine einzelne Regressionsfunktion dieses Parameters gut angenähert ist;
- auf der Grundlage der berechneten Werte, Verwerfen von einigen der Parameter (PO_opt_i) und Wiederberechnen des Modells und/oder
- Eingeben von quadratischen und Interaktionsparametern.

6. Verfahren zum Trocknen von Biomassen, die aus homogenisierten Pflanzenzelllinien einer vordefinierten botanischen Spezies stammen, wobei die Biomasse eine feste Fraktion zwischen 2 % und 6 % und eine wässrige Fraktion zwischen 94 % und 98 % umfasst, wobei das Verfahren die folgenden Schritte umfasst:
Bereitstellen eines horizontalen Sprühtrockners (10), um die Biomasse (FEED) als Eingabe zu empfangen und aus der Biomasse feste Partikel mit einer vordefinierten Partikelgröße zu erhalten;
wobei der horizontale Sprühtrockner (10) Folgendes umfasst:
eine Trocknungskammer (12), die sich überwiegend in einer horizontalen Richtung erstreckt und angepasst ist, um die Biomasse zu trocknen;
eine Zufuhrleitung, die angepasst ist, um der Trocknungskammer (12) einen Strom (FEED) der Biomasse zuzuführen, wobei der Strom (FEED) einen Betriebsparameter (P01) des Systems darstellt;
eine Luftzufuhreinheit (11), die angepasst ist, um heiße Luft in die Trocknungskammer (12) durch eine Einlassleitung (16) und ein Steuerventil (DAPO) einzuspritzen, wobei die Luftzufuhreinheit (11) angepasst ist, um mittels des Steuerventils (DAPO) die Einspritzung von Luft mit einer Durchflussrate (Por_1) und einer Temperatur (T1) zu regulieren, die auf der Grundlage der vordefinierten botanischen Spezies definiert sind, wobei die Durchflussrate (Por_1) und die Temperatur (T1) jeweilige Betriebsparameter (PO2, PO3) des Systems darstellen;
eine Auslassleitung (18), die für einen Ausfluss der festen Fraktion aus der Trocknungskammer (12) bei einer durchschnittlichen Betriebstemperatur (T2) angepasst ist, wobei die durchschnittliche Betriebstemperatur (T2) einen Betriebsparameter (PO4) des Systems darstellt;
eine Zykloneinheit (20), die mit der Trocknungskammer (12) verbunden ist und als Eingabe die feste Fraktion bei der Betriebstemperatur (T2) durch die Auslassleitung (18) empfängt, wobei die Zykloneinheit (20) angepasst ist, um die feste Fraktion bei der vordefinierten Partikelgröße durch Rühren, Druckvariation (P1) und weiteres Erwärmen (T3) der eingegebenen festen Fraktion zu trennen, wobei die Druckvariation (P1) und das weitere Erwärmen (T3) jeweilige Betriebsparameter (PO5,PO6) des Systems darstellen;
wobei der horizontale Sprühtrockner (10) angepasst ist, um auf der Grundlage von vordefinierten Werten von mindestens den Betriebsparametern (POi; i=1..n), die auf der Grundlage der vordefinierten botanischen Spezies und/oder Zelllinie definiert sind, zu arbeiten;
(f0) Berechnen eines ersten mathematischen Modells (MOD1) des Betriebs des horizontalen Sprühtrockners (10) für die Biomasse, das für eine Ausbeute (Y) des Trockners repräsentativ ist, als Funktion der Vielzahl von Betriebsparametern (POi), die mit jeweiligen Gewichten gewichtet sind;
(f01) Berechnen von Koeffizienten (Ci_POi) eines jeden ausgewählten einzelnen Betriebsparameters (POi) für eine Maximierung der Ausbeute (Y) des ersten mathematischen Modells (MOD1);
(f1) Berechnen eines zweiten mathematischen Modells (MOD2) des Betriebs des horizontalen Sprühtrockners (10) für die Biomasse, Auswählen von Parametern, die indikativ für eine optimale Ausbeute (PO_optᵢ) sind, aus der Vielzahl von Betriebsparametern (POi; i=1..n) auf der Grundlage einer Simulation einer Auswirkung eines jeden einzelnen Betriebsparameters (POi) auf das mathematische Modell für eine jede vordefinierte botanische Spezies und/oder Zelllinie;
(f02) Berechnen von Koeffizienten (Ci_PO_optᵢ) eines jeden ausgewählten einzelnen Betriebsparameters (PO_optᵢ) für die Maximierung der Ausbeute (Y) des zweiten mathematischen Modells (MOD2);
(f2) Berechnen des Ausbeutewerts (Y);
wobei die Schritte (f1), (f02) und (f2) ausgeführt werden, solange der berechnete Ausbeutewert (Y) unter einem vordefinierten Schwellenwert (Y_{TH}) bleibt; wenn der berechnete Ausbeutewert (y) größer als der vordefinierte Schwellenwert (Y_{TH}) ist, (f3) Anwenden des zweiten mathematischen Modells (MOD2) auf mindestens einen Teil der Betriebsparameter (POi) des Trockners (10), um den Trockner (10) so auszulegen, dass aus der Biomasse die festen Partikel mit der vordefinierten Partikelgröße mit dem berechneten Ausbeutewert (y) erhalten werden.

## Revendications

1. Système de séchage de la biomasse (FEED) destiné à sécher de la biomasse provenant de lignées de cellules végétales homogénéisées d'une espèce botanique prédéfinie, dans lequel la biomasse comprend une fraction solide comprise entre 2 % et 6 % et une fraction aqueuse comprise entre 94 % et 98 %, dans lequel le système comprend :
un séchoir à pulvérisation horizontal (10) adapté pour recevoir ladite biomasse (FEED) en entrée et obtenir à partir de la biomasse des particules solides présentant une taille de particule prédéfinie ;
dans lequel ledit séchoir à pulvérisation horizontal (10) comprend :
une chambre de séchage (12), s'étendant principalement dans une direction horizontale, et adaptée pour sécher ladite biomasse ;
un conduit d'alimentation adapté pour alimenter un flux (FEED) de la biomasse à ladite chambre de séchage (12), dans lequel ledit flux (FEED) représente un paramètre de fonctionnement (P01) du système ;
une unité d'alimentation en air (11) adaptée pour injecter de l'air chaud dans ladite chambre de séchage (12) par l'intermédiaire d'un conduit d'entrée (16) et d'une vanne de commande (DAPO), dans lequel ladite unité d'alimentation en air (11) est adaptée pour réguler, au moyen de ladite vanne de commande (DAPO), ladite injection à un débit (Por_1) et à une température (T1) définis sur la base desdites espèces botaniques prédéfinies, dans lequel ledit débit (Por_1) et ladite température (T1) représentent des paramètres de fonctionnement (PO2, PO3) respectifs du système ;
un conduit de sortie (18) adapté pour une évacuation de ladite fraction solide de ladite chambre de séchage (12) à une température de fonctionnement moyenne (T2), dans lequel ladite température de fonctionnement moyenne (T2) représente un paramètre de fonctionnement (PO4) du système ;
une unité cyclonique (20) reliée à ladite chambre de séchage (12) et recevant en entrée ladite fraction solide à ladite température de fonctionnement (T2) par l'intermédiaire dudit conduit de sortie (18), dans lequel ladite unité cyclonique (20) est adaptée pour séparer ladite fraction solide à ladite taille de particules prédéfinie par agitation, variation de pression (P1) et chauffage supplémentaire (T3) de ladite fraction solide d'entrée, dans lequel ladite variation de pression (P1) et ledit chauffage supplémentaire (T3) représentent des paramètres de fonctionnement (PO5, PO6) respectifs du système ;
dans lequel ledit séchoir à pulvérisation horizontal (10) est adapté pour fonctionner sur la base de valeurs prédéfinies d'au moins lesdits paramètres de fonctionnement (POi ; i = 1..n) définis sur la base de ladite espèce botanique et/ou lignée de cellules prédéfinie ;
une unité de traitement (100) configurée pour :
f0. calculer un premier modèle mathématique (MOD1) de fonctionnement dudit séchoir à pulvérisation horizontal (10) pour ladite biomasse représentative d'un rendement (Y) dudit séchoir, en fonction de ladite pluralité de paramètres de fonctionnement (POi) pondérés par des poids respectifs ;
f01 calculer des coefficients (Ci_POi) de chaque paramètre de fonctionnement (POi) individuel sélectionné pour une maximisation du rendement (Y) dudit premier modèle mathématique (MOD1) ;
effectuer les étapes de :
(f1) calculer un second modèle mathématique (MOD2) de fonctionnement dudit séchoir à pulvérisation horizontal (10) pour ladite biomasse, sélectionner des paramètres indicatifs d'un rendement optimal (PO_optᵢ) à partir de ladite pluralité de paramètres de fonctionnement (POi ;
i = 1..n) sur la base d'une simulation d'un impact de chaque paramètre de fonctionnement (POi) individuel sur ledit modèle mathématique pour chaque espèce botanique et/ou lignée de cellules prédéfinie ;
(f02) calculer des coefficients (Ci_PO_optᵢ) de chaque paramètre de fonctionnement (PO_optᵢ) individuel sélectionné pour la maximisation du rendement (Y) dudit second modèle mathématique (MOD2) ;
(f2) calculer ladite valeur de rendement (Y) ;
dans lequel lesdites étapes (f1), (f02) et (f2) sont exécutées tant que ladite valeur de rendement calculée (Y) reste inférieure à une valeur seuil prédéfinie (Y_{TH}) ; si ladite valeur de rendement calculée (Y) est supérieure à ladite valeur seuil prédéfinie (Y_{TH}), exécuter une étape (f3) consistant à appliquer le second modèle mathématique (MOD2) à au moins une partie des paramètres de fonctionnement (POi) dudit séchoir (10) afin de configurer ledit séchoir (10) de manière à obtenir, à partir de la biomasse, lesdites particules solides à ladite taille de particule prédéfinie, avec ladite valeur de rendement calculée (Y).

2. Système selon la revendication 1, dans lequel ladite pluralité de paramètres de fonctionnement (POi ; i = 1..n) comprend au moins :
(PO1) le débit de la biomasse entrante (FEED) ;
(PO2) le débit d'air entrant (Por_1) ;
(PO3) la température dudit air entrant (T1);
(PO4) la température moyenne dans la chambre de séchage (T2) ;
(PO5) la pression dans l'unité cyclonique (P1) ;
(PO6) la température dans le cyclone (T3).

3. Système selon la revendication 1 ou 2, dans lequel ledit modèle mathématique (étape f0) de fonctionnement dudit séchoir à pulvérisation horizontal (10) pour ladite biomasse est un modèle linéaire dans lequel tous les paramètres de fonctionnement (POi) sont combinés linéairement pour obtenir ledit rendement (Y) selon l'équation Y = C + C₁ PO₁ + C₂ PO₂ + ........Cₙ POₙ.

4. Système selon l'une quelconque des revendications précédentes, comprenant une base de données (DB_1) comprenant des relations entre chaque paramètre de fonctionnement (POi) individuel et chaque espèce botanique et/ou lignée de cellules prédéfinie pour un calcul dudit rendement (Y) au moyen dudit modèle mathématique, et dans ladite étape de sélection (f1), ledit modèle mathématique de fonctionnement dudit séchoir à pulvérisation horizontal (10) pour ladite biomasse est un modèle linéaire dans lequel seuls les paramètres indicatifs d'un rendement optimal (PO_opt_i) sont combinés linéairement pour obtenir ledit rendement (Y) selon l'équation
Y = C+ C₁ PO_opt₁ + C₂ PO_opt₂ + C₃ PO_opt₃

5. Système selon l'une quelconque des revendications précédentes, dans lequel ladite étape (f1) de sélection des paramètres indicatifs du rendement optimal (PO_opt_i) est réalisée en effectuant les étapes consistant à
- calculer, pour chaque paramètre indicatif du rendement optimal (PO_opt_i), des valeurs statistiques indiquant la probabilité qu'une fonction de régression unique de ce paramètre soit bien approchée ;
- sur la base desdites valeurs calculées, rejeter certains desdits paramètres (PO_opt_i) et recalculer le modèle et/ou
- entrer des paramètres quadratiques et d'interaction.

6. Procédé de séchage de biomasses provenant de lignées de cellules végétales homogénéisées d'une espèce botanique prédéfinie, dans lequel la biomasse comprend une fraction solide comprise entre 2 % et 6 % et une fraction aqueuse comprise entre 94 % et 98 %, dans lequel le procédé comprend les étapes de :
fournir un séchoir à pulvérisation horizontal (10) destiné à recevoir en entrée ladite biomasse (FEED) et à obtenir à partir de la biomasse des particules solides présentant une taille de particule prédéfinie ;
dans lequel ledit séchoir à pulvérisation horizontal (10) comprend :
une chambre de séchage (12), s'étendant principalement dans une direction horizontale, et adaptée pour sécher ladite biomasse ;
un conduit d'alimentation adapté pour alimenter un flux (FEED) de la biomasse à ladite chambre de séchage (12), dans lequel ledit flux (FEED) représente un paramètre de fonctionnement (P01) du système ;
une unité d'alimentation en air (11) adaptée pour injecter de l'air chaud dans ladite chambre de séchage (12) par l'intermédiaire d'un conduit d'entrée (16) et d'une vanne de commande (DAPO), dans lequel l'unité d'alimentation en air (11) est adaptée pour réguler, au moyen de ladite vanne de commande (DAPO), ladite injection d'air à un débit (Por_1) et à une température (T1) définis sur la base desdites espèces botaniques prédéfinies, dans lequel ledit débit (Por_1) et ladite température (T1) représentent des paramètres de fonctionnement (PO2, PO3) respectifs du système ;
un conduit de sortie (18) adapté pour une évacuation de ladite fraction solide de ladite chambre de séchage (12) à une température de fonctionnement moyenne (T2), dans lequel ladite température de fonctionnement moyenne (T2) représente un paramètre de fonctionnement (PO4) du système ;
une unité cyclonique (20) reliée à ladite chambre de séchage (12) et recevant en entrée ladite fraction solide à ladite température de fonctionnement (T2) par l'intermédiaire dudit conduit de sortie (18), dans lequel ladite unité cyclonique (20) est adaptée pour séparer ladite fraction solide à ladite taille de particules prédéfinie par agitation, variation de pression (P1) et chauffage supplémentaire (T3) de ladite fraction solide d'entrée, dans lequel ladite variation de pression (P1) et le chauffage supplémentaire (T3) représentent des paramètres de fonctionnement (PO5, PO6) respectifs du système ;
dans lequel ledit séchoir à pulvérisation horizontal (10) est adapté pour fonctionner sur la base de valeurs prédéfinies d'au moins lesdits paramètres de fonctionnement (POi ; i = 1..n) définis sur la base de ladite espèce botanique et/ou lignée de cellules prédéfinie ;
(f0) calculer un premier modèle mathématique (MOD1) de fonctionnement dudit séchoir à pulvérisation horizontal (10) pour ladite biomasse représentative d'un rendement (Y) dudit séchoir, en fonction de ladite pluralité de paramètres de fonctionnement (POi) pondérés par des poids respectifs ;
(f01) calculer des coefficients (Ci_POi) de chaque paramètre de fonctionnement (POi) individuel sélectionné pour une maximisation du rendement (Y) dudit premier modèle mathématique (MOD1) ;
(f1) calculer un second modèle mathématique (MOD2) de fonctionnement dudit séchoir à pulvérisation horizontal (10) pour ladite biomasse, sélectionner des paramètres indicatifs d'un rendement optimal (PO_optᵢ) à partir de ladite pluralité de paramètres de fonctionnement (POi ;
i = 1..n) sur la base d'une simulation d'un impact de chaque paramètre de fonctionnement (POi) individuel sur ledit modèle mathématique pour chaque espèce botanique et/ou lignée de cellules prédéfinie ;
(f02) calculer des coefficients (Ci_PO_optᵢ) de chaque paramètre de fonctionnement (PO_optᵢ) individuel sélectionné pour la maximisation du rendement (Y) dudit second modèle mathématique (MOD2) ;
(f2) calculer ladite valeur de rendement (Y) ;
dans lequel lesdites étapes (f1), (f02) et (f2) sont exécutées tant que ladite valeur de rendement calculée (Y) reste inférieure à une valeur seuil prédéfinie (Y_{TH}) ; si ladite valeur de rendement calculée (y) est supérieure à ladite valeur seuil prédéfinie (Y_{TH}), (f3) appliquer le second modèle mathématique (MOD2) à au moins une partie des paramètres de fonctionnement (POi) dudit séchoir (10) afin de configurer ledit séchoir (10) de manière à obtenir, à partir de la biomasse, lesdites particules solides à ladite taille de particule prédéfinie, avec ladite valeur de rendement calculée (y).
